(19) Europäisches Patentamt

European Patent Office

Office européen des brevets

(11) Numéro de publication: **0 618 749 A1**

## (12) DEMANDE DE BREVET EUROPEEN

(21) Numéro de dépôt: **94200811.1**

(22) Date de dépôt: **25.03.94**

(51) Int. Cl.5: **H04Q 11/04**, H04J 3/16

(30) Priorité: **31.03.93 FR 9303775**

(43) Date de publication de la demande:
**05.10.94 Bulletin 94/40**

(84) Etats contractants désignés:
**DE FR GB**

(71) Demandeur: **TRT TELECOMMUNICATIONS RADIOELECTRIOUES ET TELEPHONIOUES 88 rue Brillat Savarin F-75013 Paris (FR)**
(84) **FR**

(71) Demandeur: **N.V. Philips' Gloeilampenfabrieken Groenewoudseweg 1 NL-5621 BA Eindhoven (NL)**
(84) **DE GB**

(72) Inventeur: **Tibi, Georges, Société Civile S.P.I.D. 156, Boulevard Haussmann F-75008 Paris (FR)**

(74) Mandataire: **Chaffraix, Jean et al Société Civile S.P.I.D. 156, Boulevard Haussmann F-75008 Paris (FR)**

(54) **Dispositif et système de multiplexage d'informations pour réseau ATM.**

(57) Ce dispositif comporte : une pluralité de bornes d'accès ($170_1$ à $170_5$) pour des utilisateurs ayant des informations à transmettre vers une certaine destination avec un certain débit, au moins une borne de raccord (201) pour un des points d'accès dudit réseau, une pluralité de circuits de service ($C_1$ à $C_M$) munis d'organes de files d'attente (205, $305_1$ ..., $305_{p-1}$) pour emmagasiner des données d'utilisateur, une ligne commune de données (200) interconnectant les sorties de données desdits circuits de service avec ladite borne de raccord.

Il comporte en outre : un organe d'affectation (210) de temps d'accès à ladite ligne commune (200) pour les organes de file d'attente, muni d'une table d'affectation (212) contenant des codes de destination définissant les destinations, répartis selon le débit à transmettre et d'un organe de lecture de table (217) pour prélever à une cadence déterminée lesdits codes de destination, et un ensemble de décodage (410) pour analyser lesdits codes de destination pour commander l'accès de la ligne de données à l'organe de file d'attente concerné par un desdits codes.

Applications aux réseaux A.T.M.

FIG. 3

La présente invention concerne un dispositif de multiplexage d'informations pour un réseau du genre A.T.M. notamment, qui transmet d'un de ses points d'acccès à un autre des cellules d'informations, dispositif comportant :

- une pluralité de bornes d'accès pour des utilisateurs ayant des informations à transmettre vers une certaine destination avec un certain débit,
- au moins une borne de raccord pour un des points d'accès dudit réseau,
- une pluralité de circuits de service munis d'organes de files d'attente pour emmagasiner des données d'utilisateur,
- une ligne commune de données interconnectant les sorties de données desdits circuits de service avec l'accès de sortie du dispositif.

La présente invention concerne également un système comportant un tel dispositif.

Les réseaux A.T.M. se répandent de plus en plus et pour les utiliser au maximum des possibilités qu'ils offrent, il convient de multiplexer les données que l'utilisateur veut transmettre.

Une exigence que l'on impose à ce genre de dispositif est que le débit d'informations à écouler n'excède pas le débit que l'utilisateur a réservé auprès du réseau et pour lequel il paye. Si ce débit n'est pas respecté, le réseau auquel le dispositif est connecté fera "la police" et rejettera les cellules en excès et la liaison sera perturbée au grand détriment de l'utilisateur. Ce mécanisme est connu sous le nom d'U.P.C. ("Usage Parameter Control" - Contrôle de paramètres d'usage). Cette fonction de police est décrite dans l'ouvrage : " ASYNCHRONOUS TRANSFER MODE " de MARTIN de PRYCKER paru aux éditions ELLIS HORWOOD en Grande-Bretagne.

Un dispositif de multiplexage du genre cité dans le préambule de la présente demande est connu de l'article :

" DISTRIBUTED MERGER FOR ATM " de R. Rocha et al., paru dans l'International Conference On INTEGRATED BROADBAND SERVICE AND NETWORKS du 15-18 OCTOBRE 1990.

Ce dispositif connu présente l'inconvénient qu'aucune mesure n'est prise en ce qui concerne l'exigence précitée.

La présente invention propose un dispositif du genre précité qui satisfait cette exigence.

Pour cela, un tel dispositif est remarquable en ce qu'il comporte en outre :

- un organe d'affectation de temps d'accès à ladite ligne commune pour les organes de file d'attente, muni d'une table d'affectation contenant des codes de destination définissant les destinations, répartis selon le débit à transmettre et d'un organe de lecture de table pour prélever à une cadence déterminée lesdits codes de destination,
- un ensemble de décodage pour analyser lesdits codes de destination pour commander l'accès de la ligne de données à l'organe de file d'attente concerné par un desdits codes.

Selon une caractéristique de l'invention, un tel dispositif est remarquable en ce qu'en outre il comporte un circuit d'arbitrage pour fixer l'instant d'accès des cellules d'information contenues par des organes de files d'attente affectés à une même destination.

Cette caractéristique amène l'avantage qu'elle permet de réaliser l'arbitrage entre N circuits de service pour l'accès à ladite ligne commune, tout en respectant ladite exigence pour chaque destination du réseau ATM.

La description suivante, accompagnée des dessins ci-annexés, le tout donné à titre d'exemple non limitatif, fera bien comprendre comment l'invention peut être réalisée.

- La figure 1 montre un réseau sur lequel est connecté un dispositif de multiplexage conforme à l'invention.
- La figure 2 montre la structure des cellules d'information transmises par le réseau.
- La figure 3 montre un dispositif de multiplexage conforme à l'invention.
- La figure 4 montre un exemple de répartition de codes de destination dans la table d'affectation.
- La figure 5 montre la structure du circuit d'arbitrage.
- La figure 6 montre l'allocation des temps de service relative au dispositif de multiplexage de l'invention.

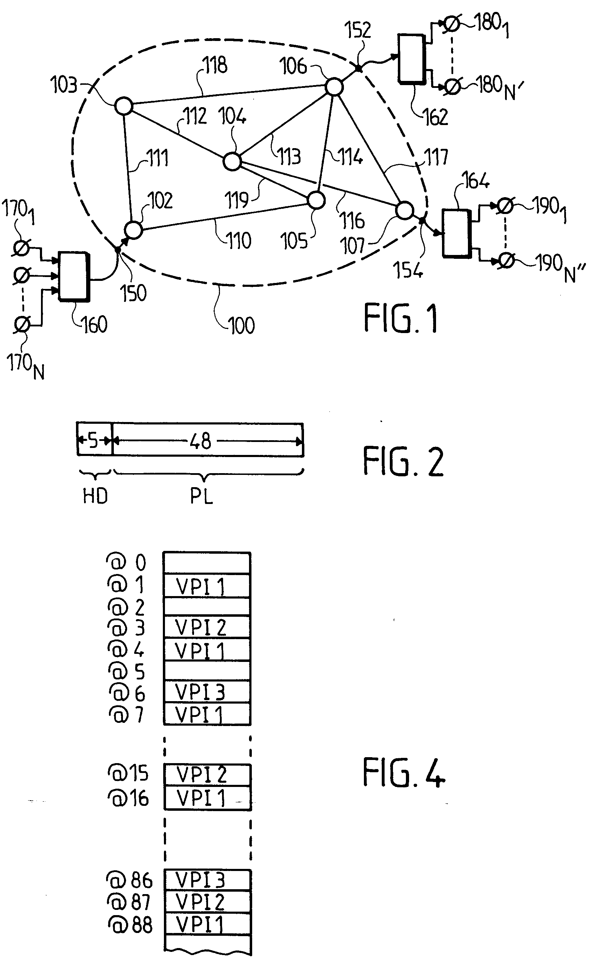

La figure 1 montre d'une manière schématisée un réseau A.T.M. portant sur la figure la référence 100. On trouvera une description de ce réseau dans l'ouvrage " ASYNCHRONOUS TRANSFER MODE " de MARTIN de PRYCKER déjà mentionné. Ce réseau est constitué de différents noeuds 102, 103, 104, 105 et 106 reliés entre eux par des liaisons 110 à 118 pour relier respectivement les noeuds 102-105, 102-103, 103-104, 104-106, 105-106, 104-105, 104-107, 106-107, 103-106. Au niveau des noeuds 102, 106 et 107 on a repéré par 150, 152 et 154 des points d'accès de ce réseau qui se situent en des endroits géographiques différents. A ces points, se connectent différents dispositifs de multiplexage et de démultiplexage 160, 162 et 164. Parmi ces dispositifs, il faut distinguer : un dispositif de multiplexage 160, objet de la présente invention et deux dispositifs de démultiplexage 161 et 162 qui effectuent les opérations inverses de celles du dispositif 160. Ainsi les informations peuvent, dans le cadre de cet exemple décrit, aller du dipositif 160 vers les dispositifs 162 et 164 en transitant par le réseau 100. Ces informations à transmettre sont appliquées à une pluralité de bornes d'accès $170_1$ à $170_N$ dont est pourvu le dispositif de multiplexage 160, et peuvent être fournies, entre autres, à des bornes de sortie $180_1$ à $180_{N'}$ du dispositif 162 et $190_1$ à $190_{N''}$ du dispositif 164. Les informations transmises dans le réseau se présentent sous forme de cellules dont l'organisation est montrée à la figure 2. Ces cellules sont formées de 53 octets : 5 constituent l'entête HD et les 48 autres PL contiennent les données pour un service à transmettre accompagnées éventuellement d'informations supplémentaires pour reconstituer les données de ce service à la réception.

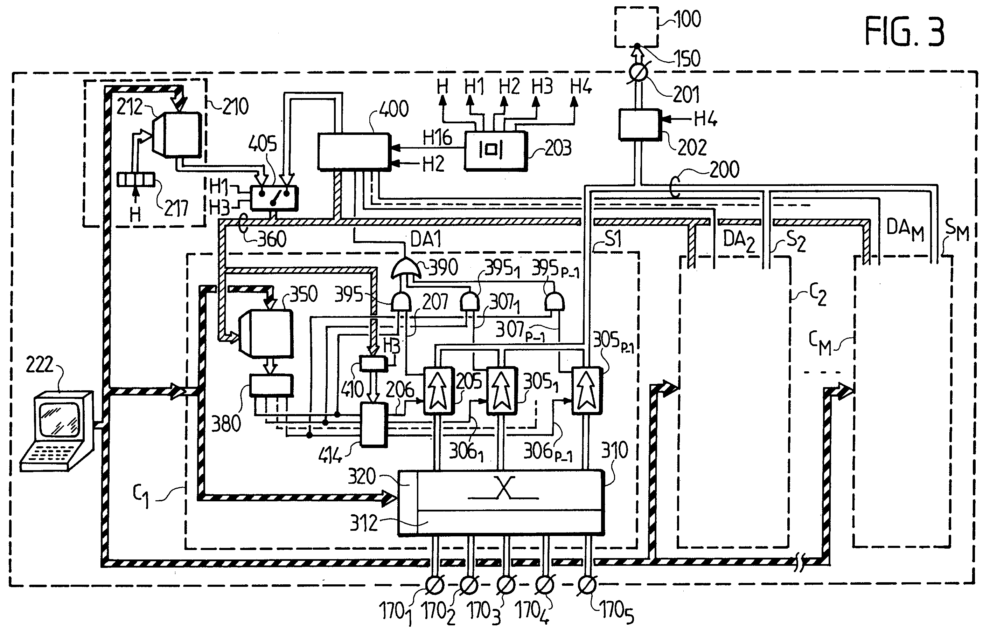

La figure 3 montre un schéma de réalisation d'un dispositif de multiplexage conforme à l'invention.

Il est composé d'une pluralité de circuits de service $C_1$, $C_2$, ..., $C_M$ munis chacun d'une sortie $S_1$, $S_2$, ..., $S_M$ respectivement reliée à une ligne de données commune 200 qui est connectée à la borne de raccord 201 par l'intermédiaire d'un circuit de sortie 202. Ce circuit 202 effectue différents traitements pour adapter les signaux à la transmission au travers d'un réseau A.T.M. Ce circuit de sortie n'accepte les signaux de cette ligne de données 200 que lorsqu'un signal H4 fournit par une horloge 203 est actif.

A chacun de ces circuits sont rattachées des bornes d'accès d'utilisateurs : les bornes $170_1$ à $170_5$ pour le circuit $C_1$ et les bornes $170_6$ à $170_N$ - (non représentées sur la figure 3) pour les autres circuits. Chaque circuit $C_1$, $C_2$,..., $C_M$ comporte au moins un organe de file d'attente formé à partir d'une mémoire du genre F.I.F.O (première donnée entrée, première donnée sortie). Ceci est en pratique réalisé au moyen d'une mémoire vive muni de circuits de lecture et d'écriture indépendants. La référence 205 indique un premier organe de file d'attente contenu dans le circuit $C_1$. On a repéré par 206 le fil qui véhicule le signal de commande de lecture et par 207 le fil qui transmet le signal de mémoire vide, en d'autres termes si la mémoire contient ou non au moins une cellule.

Conformément à l'invention, le dispositif de multiplexage montré à la figure 3 comporte, en outre, un organe d'affectation 210 qui donne des temps d'accès à la ligne commune 200 aux organes de file d'attente contenus dans les différents circuits $C_1$, $C_2$,..., $C_M$ pour que des cellules soient émises sur la borne de raccord 201 via la ligne commune 200 et le circuit de sortie 202. L'organe 210 est muni d'une table d'affectation constituée par une mémoire vive 212 contenant des codes de destination répartis d'une manière explicitée ci-dessous et d'un organe de lecture de table prévu pour prélever à une cadence déterminée lesdits codes destination. L'organe de lecture est constitué par un compteur 217 d'adressage de ladite mémoire. Ce compteur compte les impulsions H à cadence fixe du circuit d'horloge 203 de sorte que la mémoire est lue en permanence d'une manière cyclique.

La mémoire 212 de l'organe 210 est programmée à partir d'un terminal de gestion 222 qui peut être constitué par un ordinateur individuel du genre PC. Un gestionnaire du dispositif de multiplexage prend en compte les demandes de débit pour les différentes destinations et formule auprès du gestionnaire du réseau une demande pour obtenir les ressources nécessaires pour le trafic envisagé. Cette demande acceptée, le gestionnaire du réseau fournit alors un code V.P.I. ("Virtual Path Identifier") représentant, sous la forme de 8 éléments binaires, la destination. Le gestionnaire du dispositif inscrit ensuite la mémoire 212 en fonction des considérations suivantes.

La fréquence des impulsions d'horloge fixe le débit maximal susceptible d'être transmis. Soit en prenant un exemple pratique $149,76.10^6$ eb/s (éléments binaires par seconde), donc la période pour les impulsions H est de $2,83$ $\mu$s. Ainsi, si le trafic exigé pour une destination est ce débit maximal, tous les emplacements de la mémoire seront concernés par ce service. La taille de cette mémoire est définie en partie par le débit minimal $d_{min}$ à assurer par exemple : $4,5$ $10^3$ eb/s. La taille de la mémoire est alors de 32 768 emplacements. Cette taille est aussi définie par la granularité des débits à transmettre, c'est-à-dire l'ensemble des débits différents que l'on peut transmettre. Plus le nombre de débits possibles est grand, plus la taille de la table sera grande.

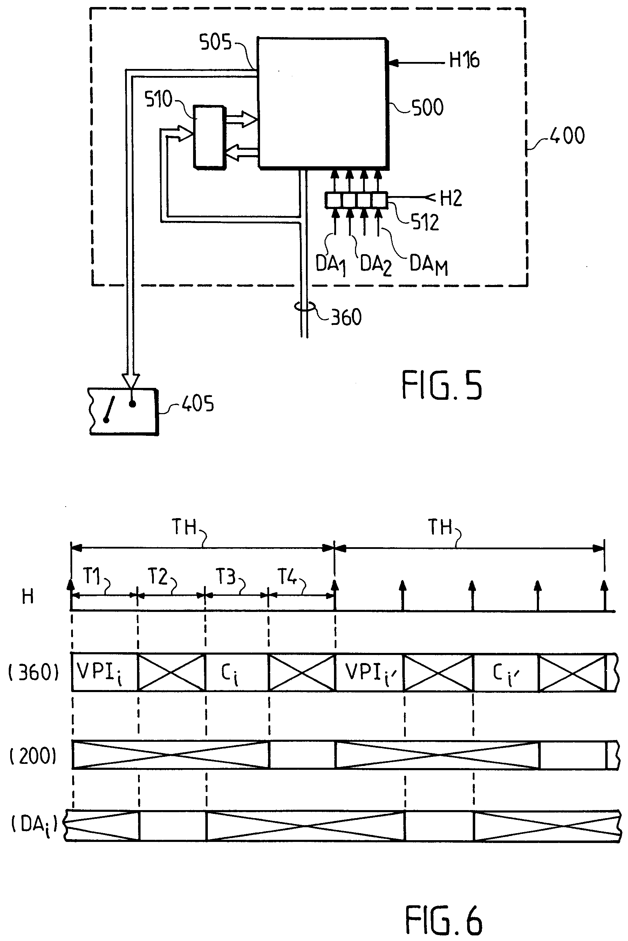

En se reportant à la figure 4, on a fait figurer les codes VPI1, VPI2 et VPI3 constituant les codes de trois destinations. Ainsi, les codes VPI1 sont inscrits toutes les trois adresses soit aux adresses @1, @4, @7, ..., @16, ..., @88, ... ce qui correspond à des services de $50.10^6$ eb/s. Les codes VPI2 sont inscrits toutes les 12 adresses soit @3, @15, ..., @87 ce qui correspond à un service de $12,5.10^6$ eb/s et enfin les codes VPI3 sont inscrits toutes les 80 adresses soit @6, @86 ce qui correspond à un service de $1,87.10^6$ eb/s. En résumé, pour un débit donné "d" et une destination donnée on effectue les opérations suivantes :
- on calcule l'espacement des codes d'adresse $\Delta@$ par :

$$\Delta@ = 32768 \times \frac{d_{min}}{d}$$

- on inscrit dans la mémoire 212 une première fois le code de destination au premier endroit disponible @D,

- on inscrit tous les autres codes aux endroits @D + k.$\Delta$@ (k = 1, 2, 3, ...) jusqu'à ce que la fin de la mémoire soit atteinte,
- si un desdits endroits est occupé par un autre code, on recherche un emplacement disponible suivant soit @D + k.$\Delta$@ + p (p = 1, 2, 3, ....)

En principe, ces circuits $C_1$, $C_2$,..., $C_M$ sont chacun affectés à un service donné. Par exemple, le circuit $C_1$ est affecté aux liaisons vidéo, genre vidéoconférence, le circuit $C_2$ aux liaisons téléphoniques et le circuit $C_M$ à des prolongations de réseaux locaux.

D'une manière avantageuse, les circuits $C_1$, $C_2$, ..., $C_M$ comportent une pluralité P d'organes de files d'attente. Ainsi, sur la figure 3, le circuit $C_1$, outre l'organe 205, comporte les organes $305_1$ à $305_{P-1}$ avec leurs fils $306_1$ à $306_{P-1}$ et $307_1$ à $307_{P-1}$ correspondant respectivement aux fils 206 et 207. Un organe de commutation 310 permet de commuter les différentes bornes d'accès sur les organes de file d'attente 205, $305_1$ à $305_{P-1}$. Cet organe de commutation peut être couplé à un formateur de cellules 312 au cas où celles-ci ne seraient pas formées au niveau de l'utilisateur. Ceci n'a pas besoin d'être décrit plus en détail car l'invention n'est pas concernée par cela. Les commutations effectuées par l'organe 310 sont définies par une table 320. Cette table est inscrite au moyen de l'organe de gestion 222 pour faire une correspondance entre une des bornes d'accès $170_1$ à $170_5$ sur laquelle un utilisateur fournit des informations, et un des organes de files d'attente 205, $305_1$ à $305_{P-1}$.

Une table formée par une mémoire 350 permet de gérer à l'intérieur des circuits de service l'accès des différents organes de file d'attente à la ligne 200. Cette table est inscrite aussi à partir de l'organe de gestion 222 qui affecte un organe de file d'attente à un code V.P.I. fourni par la gestion du réseau. Cette affectation est effectuée en tenant évidemment compte des disponibilités de ces organes de file d'attente. Cette table est adressée, en des temps fixés par des signaux H1 fournis par l'horloge 203, par les différents codes issus de la table 212 et transmis au moyen d'une ligne de service 360 commune à tous les circuits de service $C_2$, ..., $C_M$. Cette table 350 fournit, en correspondance, le code validant ou non un organe de file d'attente. Un registre 380 maintient ce code de validation pendant une période de H. Une porte OU 390 fournit un signal DA1 qui, actif, signale qu'un organe, au moins, du circuit C1 est concerné par le code de destination et que cet organe contient au moins une cellule. Ceci est déterminé par un ensemble de portes ET 395 : $395_1$ à $395_{P-1}$ à deux entrées dont les premières sont reliées aux fils 207, $307_1$ à $307_{P-1}$ et les secondes aux sorties du registre 380. La porte OU 390 reçoit tous les signaux de sortie de ces portes ET. Le signal DA1 est analysé, en des temps fixés par des signaux H2 fournis par l'horloge 203, ainsi que les signaux analogues DA2, ..., DAM par un circuit d'arbitrage 400.

Ce circuit d'arbitrage 400 fournit, en des temps fixés par les signaux H3 fournis par l'horloge 203, sur la ligne commune de service 360 un code définissant le circuit dont l'accès à la ligne 200 est autorisé. Un circuit d'aiguillage 405 commandé par les signaux H1 et H3 permet de donner l'accès à cette ligne de service soit à la mémoire 212, soit au circuit d'arbitrage en fonction des valeurs actives des signaux H1 et H3. Comme chaque circuit de service est affecté d'un code d'identification, un circuit de décodage 410 (détectant ce code d'identification) fournit un signal actif lorsque le circuit est sélectionné par le circuit d'arbitrage 400. Ce signal actif est validé en des temps fixés par le signal d'horloge H3. Le signal de décodage issu du circuit 410 permet la sélection d'un des organes de file d'attente s'il y en a un de concerné par cette opération par l'intermédiaire d'un circuit de validation 414 qui laisse passer les codes contenus dans le registre 380.

Le circuit d'arbitrage 400 est constitué d'une manière montrée à la figure 5. Il est formé d'un circuit de traitement 500 dont une partie des sorties 505 fournit le code du circuit de service auquel on a accordé l'accès au circuit de sortie 202. Une mémoire de statut 510 contient des états antérieurs et notamment l'identification du circuit qui a obtenu l'accès pour un certain VPI. Les entrées du circuit 500 sont constituées, d'une part, par les signaux DA1, DA2, ..., $DA_M$ transitant par un registre tampon 512 commandé par les signaux H2 et, d'autre part, par le code VPI transmis sur la ligne 360. La mémoire 510 contient autant d'emplacements mémoires qu'il y a de codes V.P.I. possibles soit 256. L'arbitrage opère selon une priorité tournante du genre décrit dans l'ouvrage : " DISTRIBUTED-PROCESSOR COMMUNICATION ARCHITECTURE " de Kenneth J. Thurber, et Gerald M. Masson, paru dans Lexington Books, Heatch., Chapitre 5, pages 140 et 141.

La priorité est déterminée en plusieurs phases de calculs, déterminées par un signal d'horloge H16 qui a une fréquence seize fois plus élevée que celle des signaux H.

Le contexte d'arbitrage, pour une destination donnée, est stocké dans la mémoire 510, à une adresse déduite du numéro de V.P.I. correspondant à cette destination.

Une séquence d'arbitrage se décompose alors selon les phases suivantes :
- on prélève dans la mémoire 510 le contexte d'arbitrage relatif au code de destination V.P.I.,

- on réalise l'arbitrage entre les différents circuits d'accès, selon le mécanisme de priorité tournante,
- on émet sur la ligne 360 le code du circuit qui a gagné l'accès,
- on enregistre dans le mémoire 510 le nouveau contexte d'arbitrage relatif au code de destination V.P.I.

Le diagramme temps de la figure 6 résume le fonctionnement du dispositif de l'invention. En H, on a représenté par une flèche ascendante le front actif des signaux H. C'est sur ce front, notamment, que se produit l'incrémentation du compteur 217 comme il l'a été déjà dit. La période TH qui s'écoule entre ces fronts actifs est divisée en quatre sous-périodes T1, T2, T3 et T4. Pendant la sous-période T1 la ligne 360 transmet les codes d'accès VPI, pendant la sous-période T2 les signaux $DA_i$ sont émis vers le circuit d'arbitrage 400, pendant la sous-période T3, la ligne 360 émet le code d'identification du circuit qui a accès au réseau et pendant la sous-période T4, la ligne de données 200 est utilisée pour transmettre effectivement ces données. Les sous-périodes T1, T2, T3 et T4 sont fixées respectivement au moyen des signaux d'horloges H1, H2, H3 et H4.

Un système comportant un tel dispositif peut être formé à partir d'un réseau d'un type montré à la figure 1. Ce système permet alors l'échange d'informations entre des noeuds de ce réseau via un dispositif conforme à l'invention.

**Revendications**

1. Dispositif de multiplexage d'informations pour un réseau du genre A.T.M. notamment, qui transmet d'un de ses points d'acccès à un autre des cellules d'informations, dispositif comportant :
   - une pluralité de bornes d'accès pour des utilisateurs ayant des informations à transmettre vers une certaine destination avec un certain débit,
   - au moins une borne de raccord pour un des points d'accès dudit réseau,
   - une pluralité de circuits de service munis d'organes de files d'attente pour emmagasiner des données d'utilisateur,
   - une ligne commune de données interconnectant les sorties de données desdits circuits de service avec ladite borne de raccord,
   caractérisé en ce qu'il comporte en outre :
   - un organe d'affectation de temps d'accès à ladite ligne commune pour les organes de file d'attente, muni d'une table d'affectation contenant des codes de destination définissant les destinations, répartis selon le débit à transmettre et d'un organe de lecture de table pour prélever à une cadence déterminée lesdits codes de destination,
   - un ensemble de décodage pour analyser lesdits codes de destination pour commander l'accès de la ligne de données à l'organe de file d'attente concerné par un desdits codes.

2. Dispositif de multiplexage d'informations selon la revendication 1, caractérisé en ce qu'il comporte un circuit d'arbitrage pour fixer l'instant d'accès des cellules d'information contenues par des organes de files d'attente affectés à une même destination.

3. Dispositif de multiplexage d'informations selon la revendication 1 ou 2, caractérisé en ce que chaque circuit de service comporte une pluralité d'organes de file d'attente.

4. Dispositif de multiplexage d'informations selon la revendication 3, caractérisé en ce chaque circuit de service est affecté à une même sorte de service.

5. Dispositif de multiplexage d'informations selon la revendication 3 ou 4, caractérisé en ce que les circuits de service comportent un organe de commutation pour relier les différentes bornes d'accès pour utilisateur à différents organes de files d'attente.

6. Dispositif de multiplexage d'informations selon l'une des revendications 1 à 5, caractérisé en ce qu'il est prévu une ligne commune de service pour transmettre vers les circuits de service lesdits codes de destination, tandis que l'ensemble de décodage est formé de circuits de décodage rattachés chacun à chaque circuit de service pour commander les organes de file d'attente faisant partie du même circuit de service.

7. Dispositif de multiplexage d'informations selon l'une des revendications 1 à 6, caractérisé en ce qu'il comporte un circuit d'horloge pour allouer différents temps de service pour la ligne commune de service.

8. Dispositif de multiplexage d'informations selon l'une des revendications 1 à 7, caractérisé en ce qu'un premier temps de service est alloué à la transmission desdits codes de destination et un deuxième temps est alloué pour la transmission du code d'arbitrage fourni par ledit circuit d'arbitrage pour autoriser l'accès à une certain organe de file d'attente.

9. Système comportant au moins un dispositif selon l'une des revendications 1 à 8, connecté à un noeud d'un réseau pour transmettre des informations à partir desdites bornes d'accès vers au moins un noeud dudit réseau.

FIG. 1

FIG. 2

FIG. 4

FIG. 3

FIG.5

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | EP-A-0 138 717 (DEVAULT ET AL) <br> * abrégé; revendications 1-5 * <br> * page 3, ligne 10 - page 4, colonne 16 * <br> * page 6, ligne 1 - page 8, ligne 22 * <br> --- | 1-9 | H04Q11/04 <br> H04J3/16 |
| A | FR-A-2 587 861 (DEVAULT ET AL) <br> * abrégé; revendications 1,2; figures 1,3 * <br> --- | 1-8 | |
| A | EP-A-0 351 014 (PHILIPS PATENTVERWALTUNG GMBH) <br> * colonne 5, ligne 48 - colonne 7, ligne 24 * <br> --- | 1,2 | |
| A | INT. SWITCHING SYMPOSIUM 90, <br> vol.6, Mai 1990, SWEDEN <br> pages 25 - 28, XP130957 <br> B. VOETEN ET AL <br> * Alinéa 3.1.1 et 3.3 * <br> ----- | 1 | |

**DOMAINES TECHNIQUES RECHERCHES (Int.Cl.5)**

H04Q
H04J
H04L

Le présent rapport a été établi pour toutes les revendications

| Lieu de la recherche | Date d'achèvement de la recherche | Examinateur |
|---|---|---|
| LA HAYE | 30 Mai 1994 | Ali, A |

EPO FORM 1503 03.82 (P04C02)